# EUROPEAN PATENT APPLICATION

(11) **EP 1 659 474 A1**
(43) Date of publication of application: **24.05.2006**
(21) Application number: 04300789.7
(22) Date of filing: 15.11.2004
(51) Int. Cl.: G06F 1/00

(54) **Method and USB flash drive for protecting private content stored in the USB flash drive**

(71) Applicant: Thomson Licensing, 92100 Boulogne-Billancourt (FR)
(72) Inventor: Tsang, Wing Hon, Hong Kong (CN); Lui, Tsz Shing, Hong Kong (CN); Chiu, Ronald, Hong Kong (CN)
(74) Representative: Rossmanith, Manfred

(57) **Abstract**

A method and a USE flash drive for protecting private content stored in the USE flash drive. Wherein the USE flash drive comprises a micro-controller unit, a USE connector, a flash memory array, a decoder and a storage for storing various application programs, characterized in that a backup power supply is provided in the USE flash drive, whereby the micro-controller unit controls the entire USE flash drive according to the application programs, the controlling processes comprising configuring protectable mode of the USE flash drive; initiating the protection of the USE flash drive based on a configured protectable mode; generating a signal in response to the initiating and transmitting the signal to the micro-controller unit; and recoverably deleting original file systems from the flash memory array of the USE flash drive in response to the received protection signal.

## Description

The present invention relates to a method and a USB flash drive for protecting private content stored in the USB flash drive from being read and copied by unauthorized people.

USB standard interface is widely used in the computer and electronic consumer products. It can be easily used to connect with a host computer without rebooting of the host computer and ensure fast transmission rate. USB Flash drive using a USB interface and a flash memory as a portable storage medium becomes rapidly popularised now. Since the USB flash drive are compact and easy-to-use device, it can be slipped into your pocket, or conveniently around your neck or on a key chain for portable storage. Owing to its reliability, the USB flash drive becomes also a powerful portable drive to be used to share and store different kinds of archives.

However, it happens very often when someone wants to share a USE FLASH DRIVE with other computer user, there are two issues that contradict to each other being always concerned by the owner of USB FLASH DRIVE. The first concern is whether there is enough free space in the USE FLASH DRIVE to be used for copying archives. The second concern is that some sensitive private contents stored inside the USB FLASH DRIVE could be easily peeped or copied when it is connected to the other computer user. Therefore every time before copying, the storage space and the content must be checked to eliminate the above two concerns. Otherwise, the whole copy process must be within the eyesight or in the monitoring of the owner.

Generous using of the USB flash drive is everyone's will, but private content inside the USB FLASH DRIVE always causes worry.

Therefore, a method and a USB flash drive for protecting private content stored in USB flash drive are suggested to solve this problem according to the present invention.

A method for protecting private content stored in a USB flash drive is provided, wherein the USB flash drive comprises a micro-controller unit, a USB connector, a flash memory array, a decoder and a storage for storing various application programs, therein, characterized in that a backup power supply is provided in the USB flash drive, whereby the micro-controller unit controls the entire USB flash drive according to the application programs, the controlling processes of the USB flash drive comprising
- configuring protectable mode of the USB flash drive when the USB flash drive is electrically connected to a personal computer;
- initiating the protection of the USB flash drive based on a configured protectable mode of the USB flash drive;
- generating a protection signal in response to the initiating action and transmitting the protection signal to the micro-controller unit; and
- recoverably deleting original file systems stored in the flash memory array of the USB flash drive in response to the received protection signal, so as to protect the private content in the original file systems.
   In a first embodiment, the protection of the USB flash drive can be initiated by means of activating a trigger provided on external surface of the USB flash drive.
   Advantageously the protection of the USB flash drive can be initiated by means of the trigger whether the USB flash drive in connected or not connected to a personal computer, in the case that the USB flash drive is configured in an one-time protectable mode.
   In a second embodiment of the invention, the protection of the USB flash drive can be initiated by means of ejecting the USB flash drive from a USB port of a personal computer in the case that the USB flash drive is configured in permanent protectable mode.
   Advantageously the protection of the USB flash drive can be initiated by means of ejecting the USB flash drive through directly unplugging the USB flash drive from a USB port of a personal computer, or unplugging it after ejecting the USB flash drive by an ejecting software application program.
   A USB flash drive for protecting private content stored therein is provided, wherein the USB flash drive comprises a micro-controller unit, a USB connector, a flash memory array, a decoder and a storage for storing various application programs, characterized in that a backup power is provided in the USB flash drive, whereby the micro-controller unit controls the entire USB flash drive according to the application programs, the controlling processes of the USB flash drive comprising
- configuring protectable mode of the USB flash drive when the USB flash drive is electrically connected to a personal computer;
- initiating the protection of the USB flash drive based on a configured protectable mode of the USB flash drive;
- generating a protection signal in response to the initiating action and transmitting the protection signal to the micro-controller unit;
- recoverably deleting original file systems stored in the flash memory array of the USB flash drive in response to the received protection signal, so as to protect the private content in the original file systems.

In an alternative embodiment of the USB flash drive according to invention, a trigger is provided on an external surface of the USB flash drive in order to be used to activate the protection of the USB flash drive in the case that the USB flash drive is configured in one-time protectable mode.

The principles and detail technical features of the method and the USB flash drive of the present invention will be exhibited and apparent for the skilled in this art in the following description in conjunction with accompany drawings.
Fig.1 is a block diagram illustrating the structure of the USB flash drive according to the present invention;
Fig.2 is a flow diagram illustrating the protection initiating procedure of the USB flash drive according to the present invention; and
Fig.3 is a flow diagram illustrating the protection method of the USB flash drive according to the present invention.

A method and a USB flash drive for protecting private content stored in the USB flash drive are provided according the present invention. An owner of the USB flash drive can generously share the USB FLASH DRIVE with other computer user without any worrying about the sensitive private content stored in the drive.

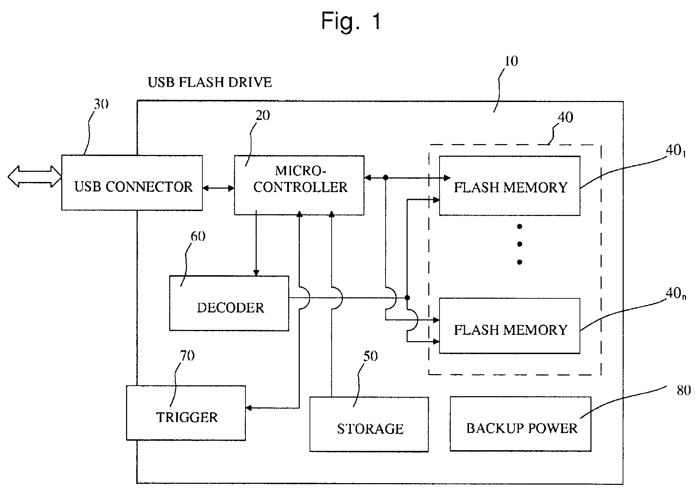

Fig.1 is a block diagram roughly illustrating the structure of the USB flash drive according to the present invention. As shown in Fig.1, the USB flash drive of the present invention typically comprises a housing 10 for receiving all electronic components fixed therein, a micro-controller 20, a USB connector 30, a flash memory array 40, a storage 50, a decoder 60, an trigger 70 and a backup power supply 80. The micro-controller 20 is intended to control the entire operation of the USB flash drive, therefore all other electronic components are in electrical connection with the micro-controller 20. The USB connector 30 having a plug end extended through outwards from one side of the housing 10 is used to connect with a USB port of a personal computer. The flash memory array 40 includes a plurality of flash memory chips 40₁~40ₙ for storing of different kinds of archives and application data therein. The storage 50 is intended to store application programs and temporarily data coming from the flash memory array 40 for content recovery purpose. The decoder 60 is intended to decode predetermined memory address information inputted from the micro-controller 20 to output a chip select signal for selectively driving the flash memory chips 40~40ₙ. The trigger 70 is provided on external surface of the housing 10 and electrically connected to the micro-controller 20. The backup power supply 80 is intended to supply power for all electronic components of the entire USB flash drive.

The USB flash drive of the present invention can be used either as a protectable USB flash drive to protect private content stored therein from being read and copied by unauthorized person, or as a conventional USB flash drive to share files stored therein between different computer users.

According to one aspect of the USB flash drive of the present invention, a configuration application program of the USB flash drive is stored in the storage 50 to be used to configure the USB flash drive in different protectable modes. A first protectable mode of the USB flash drive according to the present invention is an one-time protectable mode, in which original file systems stored in the flash memory array 40 can be recoverably deleted by means of activating the trigger 70 whether the USB flash drive is connected or not connected to a personal computer. A second protectable mode of the USB flash drive according to the present invention is a permanent protectable mode, in which the original file systems can be recoverably deleted by means of detaching the USB flash drive from a USB port of a personal computer whether it is unplugged directly or unplugged after being ejected by a software application.

When an owner of the USB flash drive intends to protect original private content stored in the USB flash drive before share the USB flash drive to other computer users, he/she can simply initiate protection of the USB flash drive through a first method, which is activated in the one-time protectable mode by means of the trigger 70, or through a second method, which is activated in the permanent protectable mode by means of detaching the USB flash drive from a USB port of a personal computer whether it is unplugged directly or unplugged after being ejected by a software application.

Once the protection of the USB flash drive is initiated by either of the first or the second method, a signal is generated in response to the activating action and then transmitted to the micro-controller 20.

The micro-controller 20 starts to run up a protection application program stored in the storage 50 in response to the received signal, so as to delete the original file systems stored in the flash memory array 40 recoverably. Therefore, in such a way, the original private content inside the USB flash drive is protected/hidden from being read and/or copied by any unauthorised person, and the storage space in the flash memory 40 of the USB flash drive is maximized.

According to another aspect of the USB flash drive of the present invention, the configuration application program stored in the storage 50 can also make the USB flash drive to be configured as a general sharable drive by disabling both one-time protectable mode and permanent protectable mode, in this case the USB flash drive can be used as a generally sharable drive between the computer users.

According to further another aspect of the USB flash drive of the present invention, when the USB flash drive is configured in the permanent protectable mode, and the owner of the USB flash drive intends to share only some new archives to the other computer user while keep all the original old content in the USB flash drive from being shown, he/she can simply copy these new archives into the USB flash drive with all original old archives being protected/hidden in advance, thus the original old archives are deleted permanently after the new archives are copied into the protected USB flash drive, and then eject the USB flash drive when it is configured in the permanent protectable mode by means of a special ejecting program in order to not delete the new archives stored therein while ejecting and unplugging the USB flash drive from the USB port of the personal computer. This special ejecting program enables one-time un-protection under the configuration of permanent protectable mode of the USB flash drive, which facilitates sharing of archives when the owner only wants to share some new files while protect the original file systems in the same time.

The main features of the USB flash drive of the present invention have been explained through the foregoing detailed description. Next, the method for protecting private content stored in the USB flash drive according to the present invention will be discussed in the following text.

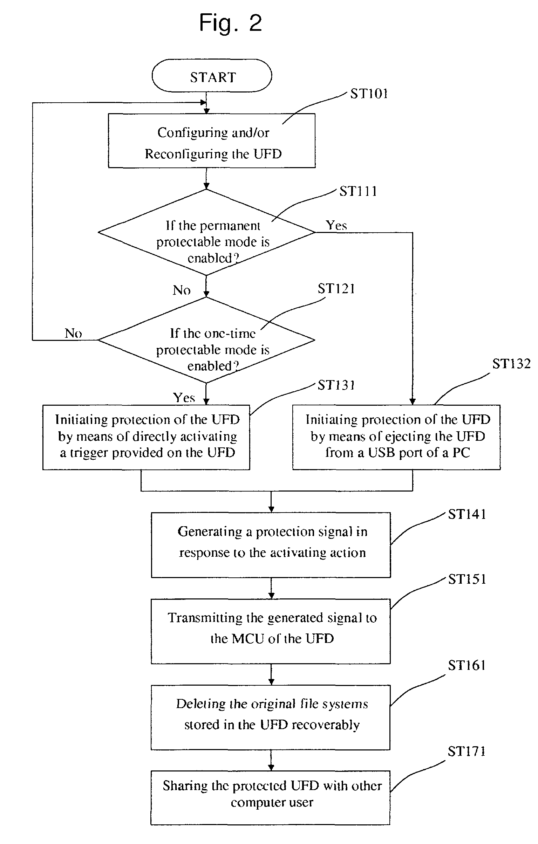

Fig. 2 illustrates the procedure of initiating protection of the USB flash drive. Usually the USB flash drive of present invention is pre-configured in the one-time protectable mode as its default protectable mode at the start. In step 101, the configuration mode of the USB flash could be confirmed or reconfigured. Steps 111 and 121 is to determining the protectable mode of the USB flash drive, so as to decide which method to be used to initiate the protection according to the configuration of the USB flash drive in subsequent steps.

As it is disclosed in previous paragraphs, there are two different methods to protect the content of the USB flash drive, if it is determined that the USB flash drive is configured in the one-time protectable mode through steps 111 and 121, then the first method of protection can be used in step 131; if it is determined that the permanent protectable mode is configured in the USB flash drive, then the second method of protection can be used in step 132. If it is determined that USB flash drive is configured that both permanent and one-time protectable modes are disabled, then the USB flash drive is in un-protectable mode.

In step 131, the trigger 70 is activated so as to initiate protection of the USB flash drive. In step 132, the protection of the USB flash drive can be activated by simply unplugging the USB flash drive from the USB port of the personal computer or unplugging after ejecting the USB flash drive by means of an ejecting software program.

Once the activating action has been done, a protection signal is generated in response to the activating action in step 141, and transmitted to the micro-controller 20 of the USB flash drive in step 151. Then the micro-controller 20 of the USB flash drive recoverably deletes the original file systems stored in the flash memory 40 in response to the received signal as it is seen in step 161. In this process, the entire original file systems are swapped into empty systems, i.e. the original file directories for the entire file systems are backup and stored into the storage 50 for the recovery purpose, and the original file directories stored in the flash memory array 40 are overwritten by empty. Certainly the file data content can be optionally scrambled for security purpose. As a result, the entire original file systems are recoverably deleted, the private content stored in the USB flash drive are protected/hidden in order to prevent the private content from being read and copied, in this way the USB flash drive is protected and prepared to share with other computer users without any worrying.

Afterwards, the USB flash drive with all original file systems being protected/hidden is prepared for sharing with other computer users, as shown in step 171.

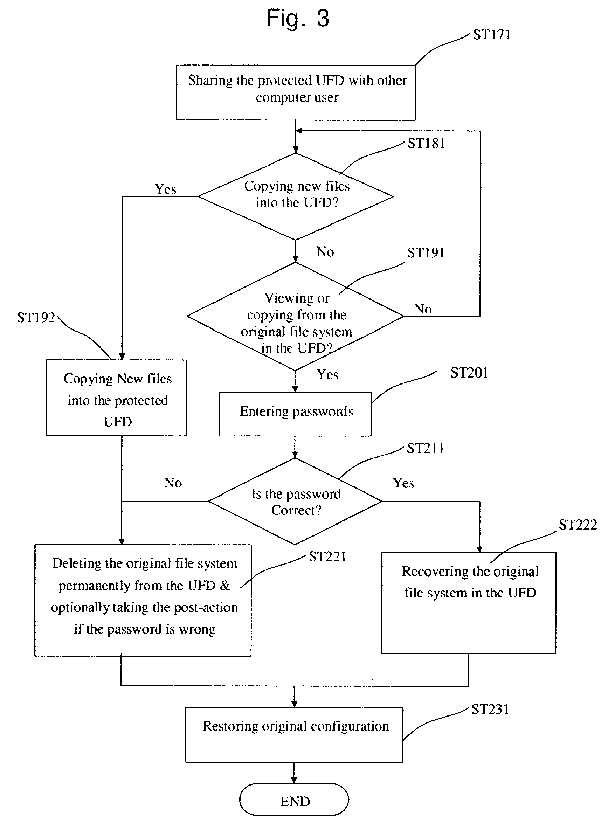

Fig.3 is a continuation to Fig.2 to explain the protection method of the USB flash drive with all the original content being protected/hidden in previous processes. Step 181 is to determine whether there are some new archives to be copied from an external peripheral into the protected USB flash drive. The external peripheral may be but not limited to a personal computer. If there are any new archives having been copied into the protected USB flash drive, the recoverably deleted file systems will be permanently destroyed and can not be recovered by any means, as seen in step 192 and step 221. If there is no new archive being copied into the protected USB flash drive, it remains in the protected status.

Next, in step 191, if someone intends to read or copy from the original file systems contained in the protected USB flash drive through a personal computer, an application grogram located in the storage of the USB flash drive will automatically run up in the computer, and a dialog box requiring for password enter will pop on the screen of the computer, as seen in step 201. If no one intends to read or copy from the protected USB flash drive, then it still remains in the protected status, or if it is given up to enter in a password, the password requiring box can be cancelled to let it returned to step 171.

If in step 201, a password is input, then it goes to step 211, which is to determine whether a correct password is inputted. If in step 211, the operator inputs incorrect passwords for several times, for example, say three times, the micro-controller 20 of the USB flash drive will run up an application program automatically to delete the original file systems permanently from the flash memory array 40 and take post-actions to notify the owner of the USB flash drive, as seen in step 221. The post-actions, for example, include sending an email, SMS, internet fax and likes etc. regarding the operation of the USB flash drive to the owner. If in step 211, the operator inputs a correct password, the micro-controller 20 of the USB flash drive will run up the application program automatically to recover the original file systems which has been recoverably deleted and hidden in the USB flash drive, and permit the operator to do further operations on the recovered content in the USB flash drive, as seen in step 222. Step 222 can only function when the entire file system is kept in the recoverable status, i.e. no new archive having been copied into the USB flash drive.

Finally, the USB flash drive is restored into its original configuration, as shown in step 231.

## Claims

1. A method for protecting private content stored in a USB flash drive, wherein the USB flash drive comprises a micro-controller unit, a USB connector, a flash memory array, a decoder and a storage for storing various application programs, therein, **characterized in that** a backup power supply is provided in the USB flash drive, whereby the micro-controller unit controls the entire USB flash drive according to the application programs, the controlling processes of the USB flash drive comprising
- configuring protectable mode of the USB flash drive when the USB flash drive is electrically connected to a personal computer;
- initiating the protection of the USB flash drive based on a configured protectable mode of the USB flash drive;
- generating a protection signal in response to the initiating action and transmitting the protection signal to the micro-controller unit; and
- recoverably deleting original file systems stored in the flash memory array of the USB flash drive in response to the received protection signal, so as to protect the private content in the original file systems.

2. The method according to claim 1, wherein the protection of the USB flash drive can be initiated by means of activating a trigger provided on external surface of the USB flash drive whether the USB flash drive in connected or not connected to a personal computer, in the case that the USB flash drive is configured in an one-time protectable mode.

3. The method according to claim 1, wherein the protection of the USB flash drive can be initiated by means of ejecting the USB flash drive from a USB port of a personal computer in the case that the USB flash drive is configured in permanent protectable mode.

4. The method according to claim 3, wherein the protection of the USB flash drive can be initiated by means of ejecting the USB flash drive through directly unplugging the USB flash drive from a USB port of a personal computer.

5. The method according to claim 3, wherein the protection of the USB flash drive can by initiated by means of ejecting the USB flash drive through unplugging the USB flash drive from a USB port of a personal computer after ejecting the USB flash drive by an ejecting software application program.

6. The method according any one of claim 1 to 5, wherein the controlling process of the USB flash drive further comprise permanently deleting the original file systems which are deleted recoverably in response to incorrect passwords inputs in the case that the original file systems are needed to be recovered.

7. The method according any one of claim 1 to 5, wherein the controlling process of the USE flash drive further comprises recovering the original file systems in response to a correct password input in case that the original file systems are needed to be recovered and the recoverably deleted original file systems are not overwritten by any new files.

8. A USB flash drive for protecting private content stored therein, wherein the USB flash drive comprises a micro-controller unit, a USB connector, a flash memory array, a decoder and a storage for storing various application programs, **characterized in that** a backup power is provided in the USB flash drive, whereby the micro-controller unit controls the entire USB flash drive according to the application programs, the controlling processes of the USB flash drive comprising
- configuring protectable mode of the USB flash drive when the USB flash drive is electrically connected to a personal computer;
- initiating the protection of the USB flash drive based on a configured protectable mode of the USB flash drive;
- generating a protection signal in response to the initiating action and transmitting the protection signal to the micro-controller unit;
- recoverably deleting original file systems stored in the flash memory array of the USB flash drive in response to the received protection signal, so as to protect the private content in the original file systems.

9. The USB flash drive according to claim 9, wherein a trigger is provided on an external surface of the USB flash drive in order to be used to activate the protection of the USB flash drive in the case that the USB flash drive is configured in one-time protectable mode.
